# EUROPEAN PATENT SPECIFICATION

(11) **EP 1 458 963 B1**
(45) Date of publication and mention of the grant of the patent: **22.06.2005**
(21) Application number: 02783340.9
(22) Date of filing: 21.10.2002
(51) Int. Cl.: F02B 37/24

(54) **CONTROL APPARATUS OF VARIABLE NOZZLE-TYPE TURBOCHARGER, AND CONTROL METHOD THEREOF**
STEUERVORRICHTUNG FÜR TURBOLADER MIT VARIABLER GEOMETRIE UND STEUERVERFAHREN DAFÜR
APPAREIL DE COMMANDE DE TURBOCOMPRESSEUR DE TYPE A TUYERES VARIABLES ET PROCEDE DE COMMANDE ASSOCIE

(30) Priority: 22.10.2001 JP 2001323230
(43) Date of publication of application: 22.09.2004
(73) Proprietor: Toyota Jidosha Kabushiki Kaisha, Toyota-shi, Aichi 471-8571 (JP); Kabushiki Kaisha Toyota Jidoshokki, Kariya-shi, Aichi-ken 448-8671 (JP)
(72) Inventor: ITOH, Yoshiyasu, Toyota-shi, Aichi-ken 471-8571 (JP); KINUHATA, Hiroki, Toyota-shi, Aichi-ken 471-8571 (JP); NARITA, Yuuji, Kariya-shi, Aichi-ken 448-8671 (JP)
(74) Representative: Leson, Thomas Johannes Alois, Dipl.-Ing.
(86) International application number: PCT/IB2002/004325
(87) International publication number: WO 2003/036062

(56) References cited:
- EP-A- 0 323 254
- EP-A- 0 899 437

## Description

### BACKGROUND OF THE INVENTION

### 1. Field of the Invention

The invention relates to a control apparatus of a variable nozzle-type turbocharger, and a control method thereof.

### 2. Description of the Related Art

Some internal combustion engines of motor vehicles and the like are equipped with a turbocharger as a supercharging device for the purpose of increasing engine output or the like. Such a turbocharger has a turbine wheel that is rotated when exhaust gas from the internal combustion engine is blown on the turbine wheel, and a compressor wheel that rotates together with the turbine wheel to forcibly deliver air toward the combustion chambers of the engine.

Variable nozzle-type turbochargers in which the pressure of supercharge into an engine (intake air) is adjusted by varying the flow speed of exhaust gas blown on the turbine wheel have been proposed, for example, in Japanese Patent Application Laid-Open Publication No. 11-132050. In this type of turbocharger, a variable nozzle (nozzle vanes) is provided in an exhaust path provided for blowing exhaust gas onto the turbine wheel, and the flow speed of exhaust gas blown onto the turbine wheel is changed by opening and closing the variable nozzle so as to change the exhaust flow area of the exhaust path.

It is conceivable that after an engine stopping operation, the variable nozzle may be displaced to a predetermined position, for example, a completely closed position, in preparation for the next operation of the engine. However, if the variable nozzle is displaced in the closing direction toward the completely closed position when the internal combustion engine is still running although the engine stopping operation has been performed, the flow speed of exhaust gas blown onto the turbine wheel becomes excessively great so that the turbocharger may undergo overspeed rotation and a malfunction may result.

### SUMMARY OF THE INVENTION

The invention has been accomplished in view of the aforementioned circumstances. It is an object of the invention to provide a control apparatus of a variable nozzle-type turbocharger capable of substantially preventing overspeed rotation of the turbocharger after an engine stopping operation and thereby preventing a malfunction, and to provide a control method thereof.

In order to achieve the foregoing object, in a variable nozzle-type turbocharger control apparatus in accordance with a first aspect of the invention, and a control method thereof, a variable nozzle that is opened and closed in order to increase and decrease an exhaust flow area of an exhaust path for blowing exhaust gas from an internal combustion engine onto a turbine wheel is provided, and the variable nozzle is controlled toward a closed side after it is determined that the engine has stopped rotating after an engine stopping operation.

Therefore, the invention prevents an undesired event where after the engine stopping operation, the variable nozzle is controlled toward the closed side while the engine is still rotating, and therefore the flow speed of exhaust gas blown onto the turbine wheel becomes excessively great. Hence, overspeed rotation of the turbocharger is substantially prevented, and a relevant malfunction is prevented.

In this specification, the engine stopping operation may be, for example, an engine stopping operation (turning off) of an ignition switch.

In the first aspect, the control means may determine whether the engine has stopped rotating, based on a detection signal from a rotation speed sensor that outputs a signal corresponding to rotation of the engine.

This construction makes it possible to precisely determine whether the engine has stopped rotating, based on the detection signal from the rotation speed sensor.

In the first aspect, the control means may determine whether the engine has stopped rotating, based on an elapsed time following the engine stopping operation.

This construction makes it possible to precisely determine whether the engine has stopped rotating, based on the elapsed time following the engine stopping operation.

In the first aspect, a range of displacement of the variable nozzle may be defined by a stopper, and the control means may control the variable nozzle toward the closed side until the variable nozzle impinges on the stopper after the engine stopping operation.

In this construction, the advantage of the above-described construction becomes more remarkable because if the variable nozzle is controlled toward the closed side so that the variable nozzle impinges on the stopper, there is a high possibility of overspeed rotation of the turbocharger and a malfunction.

In the invention, it is also permissible to adopt a construction in which the variable nozzle is displaced with reference to a reference position that is determined as a position at which the variable nozzle impinges on the stopper, and in which after the engine stopping operation, the control means controls the variable nozzle toward the closed side until the variable nozzle impinges on the stopper, for a purpose of reference position setting for a following engine operation.

This makes it possible to prevent an undesired event where overspeed rotation of the turbocharger and a related malfunction from occur when after the engine stopping operation, the variable nozzle is controlled toward the closed side for the purpose of reference position determination.

In order to achieve the foregoing object, in a variable nozzle-type turbocharger control apparatus in accordance with a second aspect of the invention, and a control method thereof, a variable nozzle that is opened and closed in order to increase and decrease an exhaust flow area of an exhaust passage for blowing exhaust gas from an internal combustion engine onto a turbine wheel is provided, and the variable nozzle is controlled toward a closed side if a rotation of the engine is below a predetermined value that is set at such a value that rotation of the turbocharger does not become fast when the variable nozzle (7) is controlled toward the closed side.

Therefor, according to the second aspect of the invention, it can prevent an undesired event where the variable nozzle is controlled toward the closed side while the engine is still rotating, and therefore the flow speed of exhaust gas blown onto the turbine wheel becomes excessively great. Hence, overspeed rotation of the turbocharger is substantially prevented, and a relevant malfunction is prevented.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:

FIG. 1 is a schematic diagram illustrating an overall construction of a variable nozzle-type turbocharger provided for an engine, and a control apparatus for controlling the driving of a variable nozzle mechanism in accordance with an embodiment of the invention;

FIG. 2 is an elevation illustrating a detailed construction of the variable nozzle mechanism;

FIG. 3 is a sectional view of the variable nozzle mechanism taken on line III-III in FIG. 2;

FIG. 4 is an enlarged view illustrating how open-close levers impinge on stoppers in the variable nozzle mechanism;

FIG. 5 is a flowchart illustrating a procedure of bringing the nozzle vanes to impingement on the closed side; and

FIGS. 6A to 6D are time charts indicating changes in various factors with respect to elapse of time when the aforementioned impingement is caused after the engine stopping operation, wherein FIG. 6A indicates changes in the state of operation of an ignition switch, and FIG. 6B indicates changes in the engine rotation speed, and FIG. 6C indicates changes in the position of the nozzle vanes, and FIG. 6D indicates changes in the rotation speed of the turbocharger.

### DETAILED DESCRIPTION OF PREFERRED EMBODIMENTS

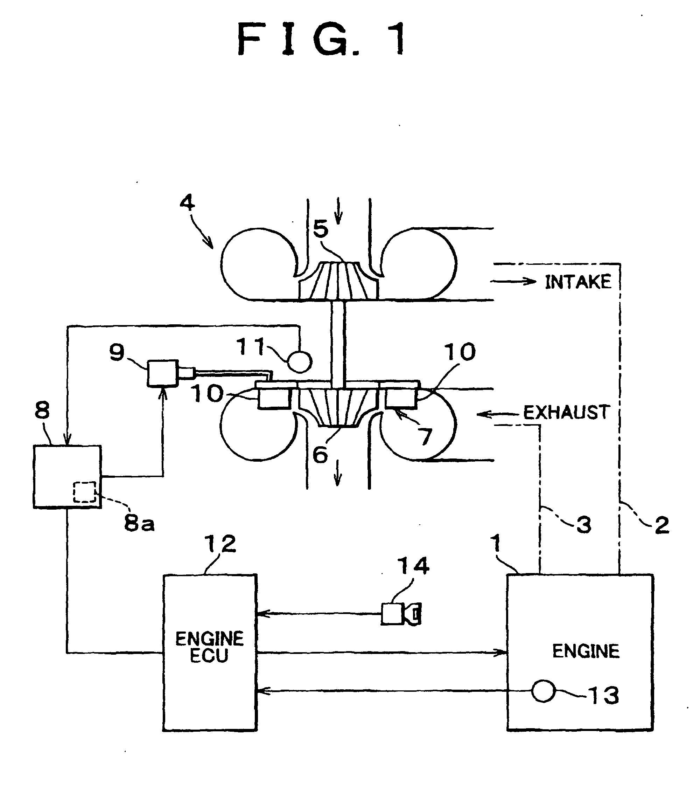

A preferred embodiment in which the invention is applied to a vehicle-installed engine equipped with a variable nozzle-type turbocharger will be described hereinafter with reference to FIGS. 1 to 6D.

Referring to FIG. 1, an upstream portion of an intake passage 2 and a downstream portion of an exhaust passage 3 of an engine 1 are connected to a turbocharger 4. The turbocharger 4 has a compressor wheel 5 for delivering air toward a downstream side of the intake passage 2, and a turbine wheel 6 that rotates upon the blowing of exhaust gas passing through the exhaust passage 3. As the turbine wheel 6 rotates, the compressor wheel 5 rotates together with the turbine wheel 6, so that the amount of air taken into the engine 1 increases. Thus, output of the engine 1 can be increased.

In the turbocharger 4, a variable nozzle mechanism 7 is provided on an exhaust path for blowing exhaust gas onto the turbine wheel 6. The variable nozzle mechanism 7 is a valve mechanism that opens and closes so as to change the exhaust flow area of the exhaust path. Changes in the exhaust flow area change the flow speed of exhaust gas blown onto the turbine wheel 6. As the flow speed of exhaust gas is changed in this manner, the rotation speed of the turbocharger 4 is changed, and the supercharge pressure (intake pressure) of the engine 1 is adjusted.

A direct-current (DC) motor 9 is adopted as an actuator for operating the variable nozzle mechanism 7. The motor 9 is driven and controlled via a controller 8. By driving the motor 9, nozzle vanes (variable nozzle) 10 provided in the variable nozzle mechanism 7 are opened and closed. As the nozzle vanes 10 are displaced toward a closed side, the flow speed of exhaust gas blown onto the turbine wheel 6 increases and the rotation speed of the turbocharger 4 increases, so that the supercharge pressure of the engine 1 rises. As the nozzle vanes 10 are displaced toward an open side, the flow speed of exhaust gas blown onto the turbine wheel 6 decreases and the rotation speed of the turbocharger 4 decreases, so that the supercharge pressure of the engine 1 drops.

The controller 8 for controlling the driving of the DC motor 9 receives input of a signal from a nozzle position sensor 11 for detecting the position of the nozzle vanes 10, and has a current detecting circuit 8a for detecting the value of current through the DC motor 9. The controller 8 is connected to an engine-controlling electronic control unit (engine ECU) 12 for controlling the operation of the engine 1, and is designed so as to receive commands from the engine ECU 12 via communication. The engine ECU 12 receives input of a signal from a rotation speed sensor 13 for detecting the engine rotation speed, and a signal from an ignition switch 14 that is operated by a vehicle operator to start and stop the engine 1.

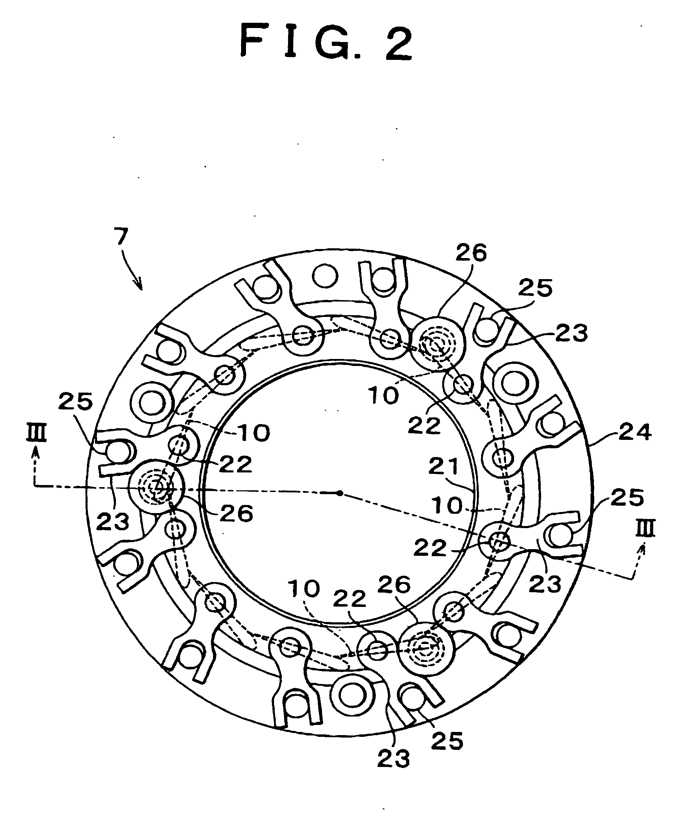

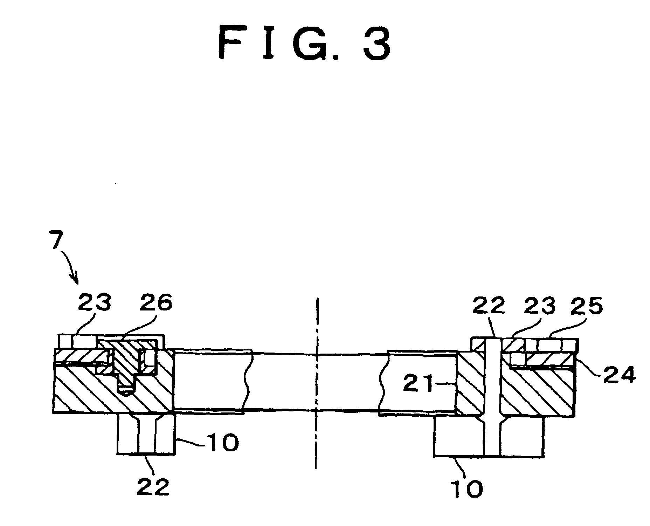

Next, the structure of the variable nozzle mechanism 7 will be described in detail with reference to FIGS. 2 and 3. FIG. 2 is an elevation of the variable nozzle mechanism 7 viewed from the side of the compressor wheel 5 (upper side in FIG. 1). FIG. 3 is a sectional view of the variable nozzle mechanism 7 taken on line III-III in FIG. 2.

As shown in FIGS. 2 and 3, the variable nozzle mechanism 7 has a ring-shaped nozzle back plate 21. The nozzle back plate 21 has a plurality of shafts 22 that are equiangularly arranged about a circular center of the nozzle back plate 21. The shafts 22 extend through the nozzle back plate 21 in the direction of thickness, and are pivotably supported. Each shaft 22 is provided with a nozzle vane 10 fixed to an end portion of the shaft 22 (a lower end portion thereof in FIG. 3), and an open-close lever 23 fixed to another end portion of the shaft 22 (an upper end portion thereof in FIG. 3). Each open-close lever 23 extends perpendicularly to a corresponding one of the shafts 22, and toward an outer peripheral edge portion of the nozzle back plate 21.

An annular ring plate 24 is provided between the open-close levers 23 and the nozzle back plate 21 so that the ring plate 24 lies over the nozzle back plate 21. The ring plate 24 is pivotable in the circumferential direction based on the driving of the DC motor 9. The ring plate 24 is provided with a plurality of pins 25 that are arranged equiangularly about a circular center of the ring plate 24. Each pin 25 is pivotably connected to a corresponding one of the open-close levers 23.

As the ring plate 24 is turned about the circular center by the DC motor 9, the pins 25 push the open-close levers 23 in the turning direction of the ring plate 24. As a result, the open-close levers 23 turn the shafts 22. As the shafts 22 turn, the nozzle vanes 10 turn synchronously in the opening or closing direction about the corresponding shafts 22. Based on the opening or closing movements of the contiguous nozzle vanes 10, the size of gaps between the nozzle vanes 10, that is, the exhaust flow area of an exhaust channel provided for blowing exhaust gas onto the turbine wheel 6, changes, so that the flow speed of exhaust gas changes.

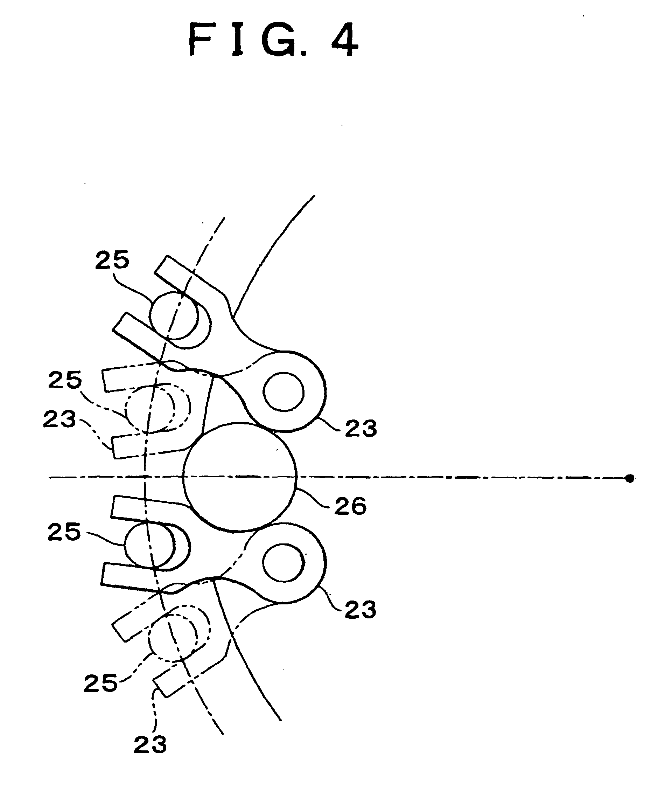

The open-close range of the nozzle vanes 10 is determined by three stoppers 26 in a total number that are arranged on the nozzle back plate 21 equiangularly about the circular center of the nozzle back plate 21. Each stopper 26 is positioned between adjacent open-close levers 23 as indicated in FIG. 4. When the nozzle vanes 10 are displaced to a farthest-possible position in the opening direction, one of the two adjacent open-close levers 23 on opposite sides of each stopper 26 (a lower open-close lever 23 in FIG. 4) contacts the stopper 26 as indicated by solid lines. In this situation, the stoppers 26 function as fully open side stoppers. When the nozzle vanes 10 are displaced to a farthest-possible position in the closing direction, the other one of the adjacent open-close levers 23 on the opposite sides of each stopper 26 (an upper open-close lever 23 in FIG. 4) contacts the stopper 26 as indicated by two-dot chain lines. In this situation, the stoppers 26 function as completely closed side stoppers.

In this manner, the open-close range of the nozzle vanes 10 is determined by the stoppers 26. Within the open-close range, the degree of opening of the nozzle vanes 10 is controlled during normal engine operation. The control of the degree of opening of the nozzle vanes 10 is accomplished by the drive control of the DC motor 9 via the controller 8 based on an opening degree command value output from the engine ECU 12. The opening degree command value is variable between 0% and 100% during normal engine operation. The opening degree command value is set at values closer to 0% for control of the nozzle vanes 10 to positions closer to the fully open side end, and is set at values closer to 100% for control of the nozzle vanes 10 to positions closer to the completely closed side end.

It should be noted herein that even when the opening degree command value is set at 100%, the nozzle vanes 10 are not disposed to such a position that the predetermined open-close levers 23 impinge on the stoppers 26. Therefore, at the control of the degree of opening of the nozzle vanes 10 during normal engine operation, the nozzle vanes 10 can be reliably displaced in the range between the fully open position and the closed position in accordance with changes in the opening degree command value between 0% and 100%. Hereinafter, this position range will be referred to as "normal use range of the degree of opening of the nozzle vanes 10". Furthermore, the rotation speed range of the turbocharger 4 corresponding to the normal use range of the degree of opening of the nozzle vanes 10 will be referred to as "normal use range of the rotation speed of the turbocharger 4".

The displacement of the nozzle vanes 10 by the control of the degree of opening of the vanes 10 is performed with reference to a predetermined position. It is preferable that this reference position be a position near the completely closed position, in order to displace the nozzle vanes 10 in the vicinity of the completely closed position with good precision.

Therefore, it is conceivable to displace the nozzle vanes 10 to the closed end side until the predetermined open-close levers 23 impinge upon the stoppers 26 after an engine stopping operation, for the sake of reference position determination for the next engine operation. In this case, by determining the position of impingement of the nozzle vanes 10 as a reference position, the nozzle vanes 10 can be accurately displaced on the basis of the reference position immediately after the engine is started.

However, if the nozzle vanes 10 are displaced toward the closed side while the engine is still turning after an engine stopping operation, the flow speed of exhaust gas blown onto the turbine wheel 6 becomes excessively great, thus incurring the danger of overspeed rotation of the turbocharger 4 and therefore a malfunction thereof.

In this embodiment, therefore, it is determined whether the engine has stopped rotating after an engine stopping operation. After it is determined that the engine has stopped rotating, the nozzle vanes 10 are displaced toward the closed side until the predetermined open-close levers 23 impinge on the stoppers 26. This prevents an undesired event where as the nozzle vanes 10 are displaced toward the closed side, the flow speed of exhaust gas blown onto the turbine wheel 6 becomes excessively great so that overspeed rotation of the turbocharger 4 occurs and a malfunction results.

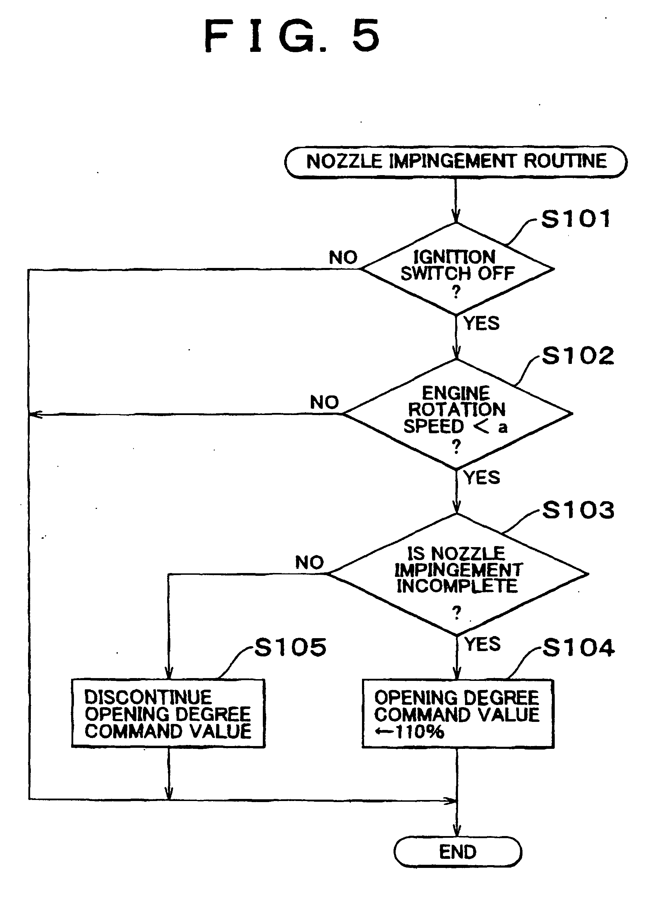

Next, a procedure of displacing the nozzle vanes 10 until the predetermined open-close levers 23 impinge on the stoppers 26 after an engine stopping operation will be described in detail with reference to the flowchart of FIG. 5 that illustrates a nozzle impingement routine. The nozzle impingement routine is executed by, for example, a time interrupt that is caused at every predetermined time, via the engine ECU 12.

In the nozzle impingement routine, if the ignition switch 14 has been operated to stop (turned off) the engine (YES at S 101), it is determined whether the engine 1 has stopped rotating. The engine rotation speed is determined based on a detection signal from the rotation speed sensor 13 which outputs a signal corresponding to the rotation of the engine 1.

The determination as to whether the engine 1 has stopped rotating is accomplished based on, for example, determination as to whether the engine rotation speed is less than a predetermined value *a* that is very close to "0" and that does not allow the rotation speed of the turbocharger 4 to increase although the nozzle vanes 10 are displaced to have impingement on the closed side (S102). The aforementioned determination may also be accomplished in other manners, for example, based on whether the elapsed time following the time point of engine stopping operation of the ignition switch 14 has reached a predetermined time that is needed for the engine rotation speed to drop to or below a predetermined value that may be "0" after the engine stopping operation. The predetermined time is determined beforehand through experiments or the like.

If the determination is affirmatively made in step S102, it is then determined whether the impingement of the nozzle vanes 10 on the closed side is incomplete (S103). The determination of completion of the impingement is made if the value of current through the DC motor 9 driven to displace the nozzle vanes 10 to the closed side becomes equal to or greater than a predetermined value x. This fashion of determination is possible because electrification of the DC motor 9 is continued after the impingement of the nozzle vanes 10 on the closed side. The determination of completion of the impingement may also be made in other fashions, for example, based on a condition that the actual position of the nozzle vanes 10 determined from a detection signal from the nozzle position sensor 11 has reached a position of completion of the impingement.

If it is determined in step S103 that the impingement is incomplete, the opening degree command value is set at a value that is on the side closer than 100% (e.g., 110%) (S104). If it is determined in step S103 that the impingement is completed, the opening degree command value is discontinued (S105). Therefore, the nozzle vanes 10 are displaced toward the closed side until the nozzle vanes 10 impinge on the closed side.

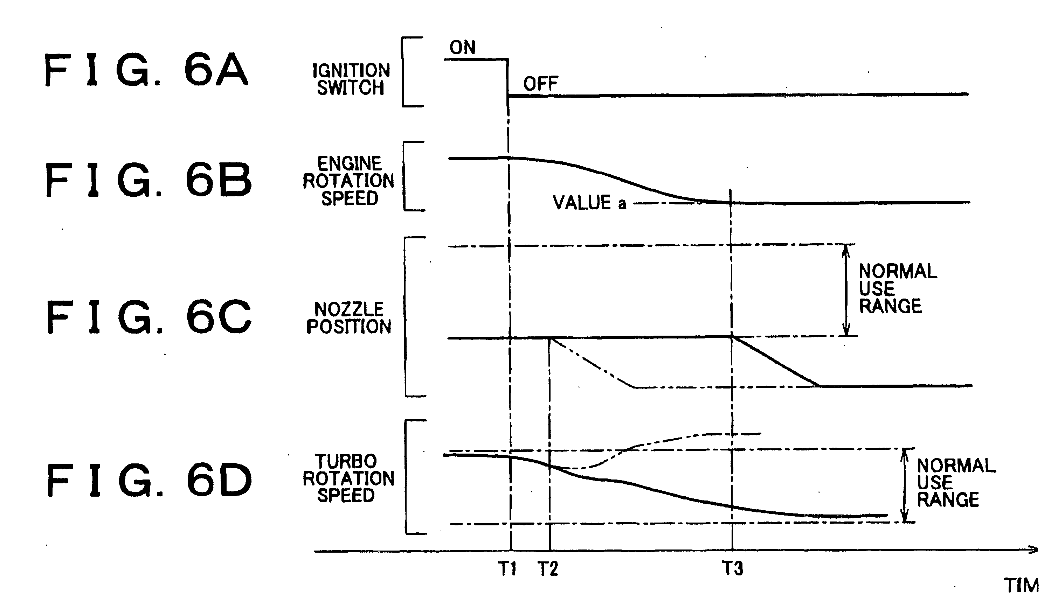

The fashions of changes in the state of operation of the ignition switch 14, the engine rotation speed, the position of the nozzle vanes 10, and the rotation speed of the turbocharger 4 with respect to elapse of time at the time of a stop of the engine 1 will be described with reference to the time charts of FIGS. 6A to 6D.

When the ignition switch 14 is operated from an on-state to an off-state as indicated in FIG. 6A in order to stop the engine 1 (timing T1), the stopping of the engine 1 is initiated, so that the engine rotation speed gradually decreases as indicated in FIG. 6B.

If the nozzle vanes 10 are displaced from the normal use range toward the closed side as indicated by a two-dot chain line in FIG. 6C (timing T2) before the engine rotation speed drops below the predetermined value a, the rotation speed of the turbocharger 4 rises above the normal use range as indicated by a two-dot chain line in FIG. 6D. This undesired event occurs because the control of the nozzle vanes 10 toward the closed side with the engine rotation speed remaining at or above the predetermined value a causes an excessive increase in the flow speed of exhaust gas blown onto the turbine wheel 6, and results in overspeed rotation of the turbocharger 4.

In contrast, in this embodiment, the nozzle vanes 10 are displaced toward the closed side as indicated by a solid line in FIG. 6C (timing T3) after the engine rotation speed has dropped below the predetermined value *a*. Therefore, the blowing of high-speed exhaust gas onto the turbine wheel 6 is avoided, and the rotation speed of the turbocharger 4 gradually decreases within the normal use range as indicated by a solid line in FIG. 6D.

The foregoing embodiment achieves the following advantages.

(1) After the engine stopping operation is performed, the nozzle vanes 10 are displaced toward the closed side until the predetermined open-close levers 23 impinge on the stoppers 26 for the purpose of reference position determination of the nozzle vane 10 for the next engine operation. The nozzle vanes 10 are displaced in this manner after it is determined that the engine 1 has stopped rotating. Therefore, the embodiment substantially prevents the undesired event where as the nozzle vanes 10 are displaced toward the closed side, the flow speed of exhaust gas blown onto the turbine wheel 6 becomes excessively great, so that overspeed rotation of the turbocharger 4 occurs and a malfunction results.

(2) After the engine stopping operation is performed, the determination as to whether the engine has stopped rotating is accomplished based on determination as to whether the engine rotation speed determined from a detection signal from the rotation speed sensor 13 that outputs a signal corresponding to the engine rotation speed has dropped below the predetermined value a that is very close to "0". Therefore, it is possible to precisely determine whether the engine 1 has stopped rotating.

The foregoing embodiment may be modified, for example, as follows.

• The actuator for driving the variable nozzle mechanism 7 may be an actuator other than the DC motor 9. For example, other types of electric motors, such as a stepping motor and the like, may be used as the aforementioned actuator.

• In the case where the determination as to whether the engine 1 has stopped rotating is made based on the elapsed time following initiation of the stopping of the engine, that is, execution of the engine stopping operation of the ignition switch 14, it is possible to change the threshold value (stop determination time) for use in the aforementioned determination in accordance with the engine rotation speed occurring at the time of the engine stopping operation (immediately before the ignition switch 14 is turned off). In the case of this modification, the stop determination time is increased with increases in the engine rotation speed occurring at the time of the engine stopping operation.

Although in the foregoing description, the invention is applied to a construction in which after the engine stopping operation is performed, the nozzle vanes 10 (the predetermined open-close levers 23 in a more accurate term) caused to impinge on the completely closed side stoppers (stoppers 26), the invention may also be applied to a construction in which after the engine stopping operation is performed, the nozzle vanes 10 are controlled to a predetermined position toward the closing direction. In the case of application of this modification to the foregoing embodiment, the advantage (1) becomes more remarkable because after the engine stopping operation, the nozzle vanes 10 are displaced toward the closed side until the nozzle vanes 10 reaches a predetermined position before the completely closed side stoppers 26. As the result, the flow speed of exhaust gas reduces in comparison with the aforementioned embodiments in which the nozzle vanes 10 impinge on the completely closed side stoppers, and this can prevent from occurring an undesired event such as overspeed rotation of the turbocharger 4.

Although in the foregoing description, the invention is applied to a construction in which after the engine stopping operation, the nozzle vanes 10 are displaced toward the closed side for the purpose of reference position determination of the nozzle vanes 10 for the next engine operation, the invention may also be applied to a construction in which after the engine stopping operation, the nozzle vanes 10 are controlled toward the closed side for other purposes or reasons.

While the invention has been described with reference to what are presently considered to be preferred embodiments thereof, it is to be understood that the invention is not limited to the disclosed embodiments or constructions. To the contrary, the invention is intended to cover various modifications and equivalent arrangements.

## Claims

1. A control apparatus of a variable nozzle-type turbocharger (4) equipped with a variable nozzle (7) that is opened and closed in order to increase and decrease an exhaust flow area of an exhaust passage for blowing exhaust gas from an internal combustion engine (1) onto a turbine wheel (6), **characterized by** comprising control means for determining whether a rotation speed of the engine (1) has reached a predetermined value (a) that is set at such a value that rotation of the turbocharger (4) does not become fast when the variable nozzle (7) is controlled toward a closed side, and for controlling the variable nozzle (7) toward the closed side if it is determined that the rotation speed has reached the predetermined value (a) after the engine stopping operation.

2. A control apparatus according to claim 1, wherein the predetermined value (a) is "0".

3. A control apparatus according to claim 1 or 2, wherein the control means determines whether the rotation speed has reached the predetermined value (a), based on a detection signal from a rotation speed sensor (13) that outputs a signal corresponding to rotation of the engine (1).

4. A control apparatus according to claim 1 or 2, wherein the control means determines whether the rotation speed has reached the predetermined value (a), based on whether an elapsed time after the engine stopping operation has reached a predetermined time that is needed for the engine rotation speed to drop to the predetermined value (a).

5. A control apparatus according to any preceding claim, wherein the engine stopping operation is an engine stopping operation of an ignition switch (14).

6. A control apparatus according to any preceding claim, wherein a range of displacement of the variable nozzle (7) is defined by a stopper (26), and the control means controls the variable nozzle (7) toward the closed side until an open-close lever (23) of the variable nozzle (7) impinges on the stopper (26) after the engine stopping operation.

7. A control apparatus according to claim 6, wherein the variable nozzle (7) is displaced with reference to a reference position that is determined as a position at which said open-close lever (23) impinges on the stopper, and that, after the engine stopping operation, the control means controls the variable nozzle (7) toward the closed side until said open-close lever (23) impinges on the stopper (26), for a purpose of reference position setting for a following engine operation.

8. A control method of a variable nozzle-type turbocharger (4) equipped with a variable nozzle (7) that is opened and closed in order to increase and decrease an exhaust flow area of an exhaust passage for blowing exhaust gas from an internal combustion engine (1) onto a turbine wheel (6), **characterized by** comprising the steps:
determining whether a rotation speed of the engine (1) has reached a predetermined value (a) that is set at such a value that rotation of the turbocharger (4) does not become fast when the variable nozzle (7) is controlled toward a closed side, and
controlling the variable nozzle (7) toward a closed side if it is determined that the rotation speed has reached the predetermined value (a) after the engine stopping operation.

9. A control method according to claim 8, wherein the predetermined value (a) is "0".

10. A control method according to claim 8 or 9, wherein it is determined whether the rotation speed has reached the predetermined value (a), based on a signal corresponding to rotation of the engine (1).

11. A control method according to claim 8 or 9, wherein it is determined whether the rotation speed has reached the predetermined value (a), based on whether an elapsed time after the engine stopping operation has reached a predetermined time that is needed for the engine rotation speed to drop to the predetermined value (a).

## Patentansprüche

1. Steuergerät eines Turboladers (4) der Art mit variabler Düse, der mit einer variablen Düse (7) versehen ist, die geöffnet und geschlossen wird, um eine Abgasströmungsfläche eines Abgaskanals zum Blasen von Abgas von einem Verbrennungsmotor (1) zu einem Turbinenrad (6) zu vergrößern und verkleinern, **dadurch gekennzeichnet, dass** es eine Steuereinrichtung aufweist zum Bestimmen, ob eine Drehzahl des Verbrennungsmotors (1) einen vorbestimmten Wert (a) erreicht hat, der auf solch einen Wert eingestellt ist, dass eine Drehzahl des Turboladers (4) nicht hoch wird, wenn die variable Düse (7) zu einer geschlossenen Seite hin gesteuert wird, und zum Steuern der variablen Düse (7) zu der geschlossenen Seite hin, wenn bestimmt wird, dass die Drehzahl den vorbestimmten Wert (a) nach dem Verbrennungsmotoranhaltevorgang erreicht hat.

2. Steuergerät gemäß Anspruch 1, wobei der vorbestimmte Wert (a) "0" ist.

3. Steuergerät gemäß Anspruch 1 oder 2, wobei die Steuereinrichtung auf der Grundlage eines Erfassungssignals von einem Drehzahlsensor (13), der ein der Drehzahl des Verbrennungsmotors (1) entsprechendes Signal ausgibt, bestimmt, ob die Drehzahl den vorbestimmten Wert (a) erreicht hat.

4. Steuergerät gemäß Anspruch 1 oder 2, wobei die Steuereinrichtung auf der Grundlage, ob eine nach dem Verbrennungsmotoranhaltevorgang vergangene Zeitspanne eine vorbestimmte Zeitspanne erreicht hat, die erforderlich ist, um die Verbrennungsmotordrehzahl auf den vorbestimmten Wert (a) zu verringern, bestimmt, ob die Drehzahl den vorbestimmten Wert (a) erreicht hat.

5. Steuergerät gemäß einem der vorherigen Ansprüche, wobei der Verbrennungsmotoranhaltevorgang eine Verbrennungsmotoranhaltebetätigung eines Zündschalters (14) ist.

6. Steuergerät gemäß einem der vorherigen Ansprüche, wobei ein Verstellbereich der variablen Düse (7) durch einen Anschlag (26) festgelegt ist, und die Steuereinrichtung die variable Düse (7) zu der geschlossenen Seite hin steuert, bis ein Öffnungs-Schließ-Hebel (23) der variablen Düse (7) nach dem Verbrennungsmotoranhaltevorgang auf den Anschlag (26) einwirkt.

7. Steuergerät gemäß Anspruch 6, wobei die variable Düse (7) bezüglich einer Bezugsposition verstellt wird, die als eine Position bestimmt ist, bei der der Öffnungs-Schließ-Hebel(23) auf den Anschlag einwirkt, und die Steuereinrichtung nach dem Verbrennungsmotoranhaltevorgang die variable Düse (7) zu der geschlossenen Seite hin steuert zum Zweck einer Bezugspositionseinstellung für einen folgenden Verbrennungsmotorbetrieb, bis der Öffnungs-Schließ-Hebel (23) auf den Anschlag (26) einwirkt.

8. Steuerverfahren eines Turboladers (4) der Art mit variabler Düse, der mit einer variablen Düse (7) versehen ist, die geöffnet und geschlossen wird, um eine Abgasströmungsfläche eines Abgaskanals zum Blasen von Abgas von einem Verbrennungsmotor (1) zu einem Turbinenrad (6) zu vergrößern und verkleinern, **gekennzeichnet durch** die folgenden Schritte:
Bestimmen, ob eine Drehzahl des Verbrennungsmotors (1) einen vorbestimmten Wert (a) erreicht hat, der auf solch einen Wert eingestellt ist, dass eine Drehzahl des Turboladers (4) nicht hoch wird, wenn die variable Düse (7) zu einer geschlossenen Seite hin gesteuert wird, und
Steuern der variablen Düse (7) zu einer geschlossenen Seite hin, wenn bestimmt wird, dass die Drehzahl den vorbestimmten Wert (a) nach dem Verbrennungsmotoranhaltevorgang erreicht hat.

9. Steuerverfahren gemäß Anspruch 8, wobei der vorbestimmte Wert (a) "0" ist.

10. Steuerverfahren gemäß Anspruch 8 oder 9, wobei auf der Grundlage eines Signals, das der Drehzahl des Verbrennungsmotors (1) entspricht, bestimmt wird, ob die Drehzahl den vorbestimmten Wert (a) erreicht hat.

11. Steuerverfahren gemäß Anspruch 8 oder 9, wobei auf der Grundlage, ob eine nach dem Verbrennungsmotoranhaltevorgang vergangene Zeitspanne eine vorbestimmte Zeitspanne erreicht hat, die erforderlich ist, um die Verbrennungsmotordrehzahl auf den vorbestimmten Wert (a) zu verringern, bestimmt wird, ob die Drehzahl den vorbestimmten Wert (a) erreicht hat.

## Revendications

1. Appareil de commande de turbocompresseur de type à tuyères variables (4) équipé d'une tuyère variable (7) qui est ouverte et fermée afin d'augmenter et de réduire une section de passage d'échappement d'une sortie d'échappement pour faire exploser du gaz d'échappement à partir d'un moteur à combustion interne (1) sur une roue de turbine (6), **caractérisé en ce qu'**il comprend un moyen de commande pour déterminer si une vitesse de rotation du moteur (1) a atteint la valeur prédéterminée (a) qui est réglée sur une telle valeur que la rotation du turbocompresseur (4) ne s'accélère pas quand la tuyère variable (7) est commandée dans la direction d'un côté fermé, et pour commander la tuyère variable (7) dans la direction du côté fermé s'il est déterminé que la vitesse de rotation a atteint la valeur prédéterminée (a) après l'opération d'arrêt du moteur.

2. Appareil de commande selon la revendication 1, dans lequel la valeur prédéterminée (a) est « 0 ».

3. Appareil de commande selon la revendication 1 ou 2, dans lequel le moyen de commande détermine si la vitesse de rotation a atteint la valeur prédéterminée (a), en fonction d'un signal de détection en provenance d'un capteur de vitesse de rotation (13) qui émet un signal correspondant à la rotation du moteur (1).

4. Appareil de commande selon la revendication 1 ou 2, dans lequel le moyen de commande détermine si la vitesse de rotation a atteint la valeur prédéterminée (a), selon qu'un temps écoulé après l'opération d'arrêt du moteur ait atteint ou non une durée prédéterminée qui est nécessaire pour que la vitesse de rotation du moteur descende à la valeur prédéterminée (a).

5. Appareil de commande selon l'une quelconque des revendications précédentes, dans lequel l'opération d'arrêt du moteur est une opération d'arrêt du moteur d'un contacteur d'allumage (14).

6. Appareil de commande selon l'une quelconque des revendications précédentes, dans lequel une plage de déplacement de la tuyère variable (7) est définie par un butoir (26), et le moyen de commande commande la tuyère variable (7) dans la direction du côté fermé jusqu'à ce qu'un levier ouvert/fermé (23) de la tuyère variable (7) impacte le butoir (26) après l'opération d'arrêt du moteur.

7. Appareil de commande selon la revendication 6, dans lequel la tuyère variable (7) est déplacée par rapport à une position de référence qui est déterminée comme une position à laquelle ledit levier ouvert/fermé (23) impacte le butoir, et que, après l'opération d'arrêt du moteur, le moyen de commande commande la tuyère variable (7) dans la direction du côté fermé jusqu'à ce que ledit levier ouvert/fermé (23) impacte le butoir (26), dans le but de régler la position de référence pour une opération du moteur suivante.

8. Procédé de commande d'un turbocompresseur de type à tuyères variables (4) équipé d'une tuyère variable (7) qui est ouverte et fermée afin d'augmenter et de réduire une section de passage d'échappement d'une sortie d'échappement pour faire exploser du gaz d'échappement à partir d'un moteur à combustion interne (1) sur une roue de turbine (6), **caractérisé en ce qu'**il comprend les étapes consistant à :
déterminer si une vitesse de rotation du moteur (1) a atteint une valeur prédéterminée (a) qui est réglée sur une telle valeur que la rotation du turbocompresseur (4) ne s'accélère pas quand la tuyère variable (7) est commandée dans la direction d'un côté fermé, et
commander la tuyère variable (7) dans la direction d'un côté fermé s'il est déterminé que la vitesse de rotation a atteint la valeur prédéterminée (a) après l'opération d'arrêt du moteur.

9. Procédé de commande selon la revendication 8, dans lequel la valeur prédéterminée (a) est « 0 ».

10. Procédé de commande selon la revendication 8 ou 9, dans lequel il est déterminé si la vitesse de rotation a atteint la valeur prédéterminée (a), en fonction d'un signal correspondant à la rotation du moteur (1).

11. Procédé de commande selon la revendication 8 ou 9, dans lequel il est déterminé si la vitesse de rotation a atteint la valeur prédéterminée (a), selon qu'un temps écoulé après l'opération d'arrêt du moteur ait atteint ou non une durée prédéterminée qui est nécessaire pour que la vitesse de rotation du moteur descende à la valeur prédéterminée (a).
